# EUROPÄISCHE PATENTSCHRIFT

(11) **EP 0 875 297 B1**
(45) Veröffentlichungstag und Bekanntmachung des Hinweises auf die Patenterteilung: **24.09.2003**
(21) Anmeldenummer: 98107363.8
(22) Anmeldetag: 22.04.1998
(51) Int. Cl.: B05B 13/00, B05B 13/04

(54) **Bearbeitungsanlage zur serienweisen Bearbeitung von Werkstücken**
Installation for the serial treatment of workpieces
Installation de traitement en série de pièces

(30) Priorität: 28.04.1997 DE 19717982
(43) Veröffentlichungstag der Anmeldung: 04.11.1998
(73) Patentinhaber: Dürr Systems GmbH, 70435 Stuttgart (DE)
(72) Erfinder: Lorenz, Bernd, 74357 Bönnigheim (DE)
(74) Vertreter: Heusler, Wolfgang, Dipl.-Ing.

(56) Entgegenhaltungen:
- EP-A- 0 084 523
- EP-A- 0 446 120
- EP-A- 0 745 429
- US-A- 4 869 935

## Beschreibung

Die Erfindung betrifft eine Bearbeitungsanlage zur serienweisen Bearbeitung von Werkstücken gemäß dem Oberbegriff des Anspruchs 1. Eine derartige Bearbeitungsanlage ist aus EP 84523 bekannt.

Ein typisches Anwendungsbeispiel für diese Anlage ist die Wartung und Instandhaltung oder auch Reparatur von Robotern oder sonstigen programmgesteuerten mehrachsigen Bearbeitungsmaschinen zur Applikation von Beschichtungs- und/oder Abdichtungsmaterialien auf Kraftfahrzeugkarossen, die serienweise von einem Förderer längs einer gegebenen Bearbeitungs- oder Förderlinie in einem begrenzten Applikationsraum, beispielsweise einer geschlossenen Kabine, an den Bearbeitungsmaschinen vorbeibewegt werden. Die Roboter o. dgl. können dieselben oder auch unterschiedliche Arbeiten ausführen, beispielsweise Lackieren, Abdichten von Nähten, Unterbodenschutz usw. und sind in vielen Fällen an einer Führungskonstruktion längs der Förderlinie verfahrbar, als zusätzlicher kinematischer Freiheitsgrad, den man als "Mitfahrachse" bezeichnet, wenn Werkstücke und Roboter gleichzeitig längs der Förderlinie bewegt werden.

Die zur Wartung und Instandhaltung der Roboter erforderlichen Arbeiten erfolgen bisher innerhalb des begrenzten Applikationsraums. Dieser Raum ist aber u.a. aus Sicherheitsgründen während des Applikationsbetriebes für das Personal unzugänglich, d.h. er wird nur bei Betriebsunterbrechung für Wartungs-, Instandhaltungs- und Instandsetzungsarbeiten zugänglich. Infolgedessen können diese Arbeiten bisher unter den üblichen Arbeitsbedingungen nur nach Schichtende oder am Wochenende durchgeführt werden. Bei der in zunehmendem Maße erforderlichen 24-Stunden-Auslastung der Anlage etwa durch Dreischichtbetrieb und Samstagsbetrieb bleibt sogar nur noch der Sonntag für Wartungsarbeiten. Diese Einschränkung und Verdichtung der verfügbaren Wartungszeiten bedingen besonderen Personaleinsatz und aufwendige Produktionsabsicherungsmaßnahmen. Da die verfügbare Wartungszeit außerdem nicht immer ausreicht, kann es dennoch zu Betriebsunterbrechungen und entsprechenden Produktionsausfällen kommen. Unvermeidbar werden solche Produktionsausfälle im Falle einer Störung eines Roboters während des Applikationsbetriebes, denn dann muß der Betrieb unterbrochen und der defekte Roboter ausgebaut werden, bevor die übrigen Roboter nach relativ kurzer Zeit mit dem Betrieb fortfahren können.

Die Anlage soll deshalb die Wartung, Instandhaltung und Instandsetzung einer Bearbeitungsmaschine zu jeder beliebigen Zeit auch unter der Woche ohne wesentliche Unterbrechung des Bearbeitungsbetriebes der übrigen Bearbeitungsmaschinen ermöglichen, d.h. im Gegensatz zu der bisherigen Praxis erfolgen Wartung, Instandhaltung usw. der Bearbeitungsmaschinen nicht mehr innerhalb, sondern außerhalb des unzugänglichen Arbeitsbereiches, bei dem oben genannten Anwendungsfall also außerhalb des begrenzten Applikationsraumes. Dadurch wird eine optimale Verfügbarkeit der in der Anlage vorhandenen Bearbeitungsmaschine erreicht. Unterbrechungen des Bearbeitungsbetriebes sind, wenn überhaupt, nur noch für vernachlässigbar kurze Zeit erforderlich. Da die Wartungsarbeiten während der normalen Arbeitszeit durchgeführt werden können, werden die mit Nacht- oder Wochenendarbeit verbundenen bisherigen Personalprobleme vermieden. In manchen Fällen kann auch der Anlagenaufwand herabgesetzt werden, weil keine oder geringere Maschinenredundanz erforderlich ist. Wenn z.B. verschiedene Roboter für verschiedene Applikationsarbeiten verwendet werden, etwa für abwechselnde Abdicht- und Lackierarbeiten, kann die Wartung in eine Zeit gelegt werden, in der der betreffende Roboter nicht benötigt und von einem anderen Roboter abgelöst wird.

Bei Herausfahren beispielsweise eines Beschichtungsroboters aus dem begrenzten, unzugänglichen Arbeitsbereich stellt sich aber das Problem, daß er bei den bisher bekannten und üblichen Konstruktionen, mit denen er während des Betriebes mit seinen Versorgungsleitungen für Beschichtungsmaterial, Druckluft usw. verbunden ist, zur Wartung von den Leitungen getrennt werden müßte. Bei dem betrachteten Beispiel werden die von außerhalb in die Kabine geführten Versorgungsleitungen im Betrieb von einer Kabelschleppeinrichtung (der sogenannten Energiekette) auf einem mit der Transporteinrichtung des Roboters gekoppelten separaten Schlitten längs der Führungskonstruktion mitbewegt. Die Trennung der Bearbeitungsmaschine von sämtlichen Versorgungsleitungen, im Falle eines Lakkierroboters speziell von seinen Farbleitungen, setzt eine Vielzahl komplizierter Trennstellen voraus und würde zu hohem Zeit- und Arbeitsaufwand beim Trennen, Widerankoppeln und Abdichten der Leitungen sowie zu hohen Verlusten an Spülmitteln für die erforderliche Reinigung der Leitungen führen. Außerdem wären erhebliche Verschmutzungen der Umgebung durch Restmedien aus den abgekoppelten Leitungen möglich.

Der Erfindung liegt daher die Aufgabe zugrunde, eine Anlage der betrachteten Gattung anzugeben, die bei der Wartung oder Reparatur der Bearbeitungsmaschine außerhalb des begrenzten, unzugänglichen Arbeitsbereiches das Abtrennen der Bearbeitungsmaschine von ihren Versorgungsleitungen vermeidet.

Diese Aufgabe wird durch die in Anspruch 1 angegebene Bearbeitungsanlage gelöst.

Die Bearbeitungsmaschine kann also auch in ihrer Wartungsposition an die Versorgungsleitungen angeschlossen bleiben. Dadurch werden komplizierte und aufwendige Trennstellen vermieden. Aufwendige Arbeiten zum Abtrennen von Versorgungsleitungen bei Reparatur- und Wartungsarbeiten entfallen ebenso wie Reinigungsarbeiten und der Einsatz von Reinigungsmedien vor dem Abtrennen. Es können keine Verschmutzungen durch das Trennen von Versorgungsleitungen entstehen. Außerdem werden Abrieb und Verschleiß von mechanischen Kupplungen an Trennstellen vermieden.

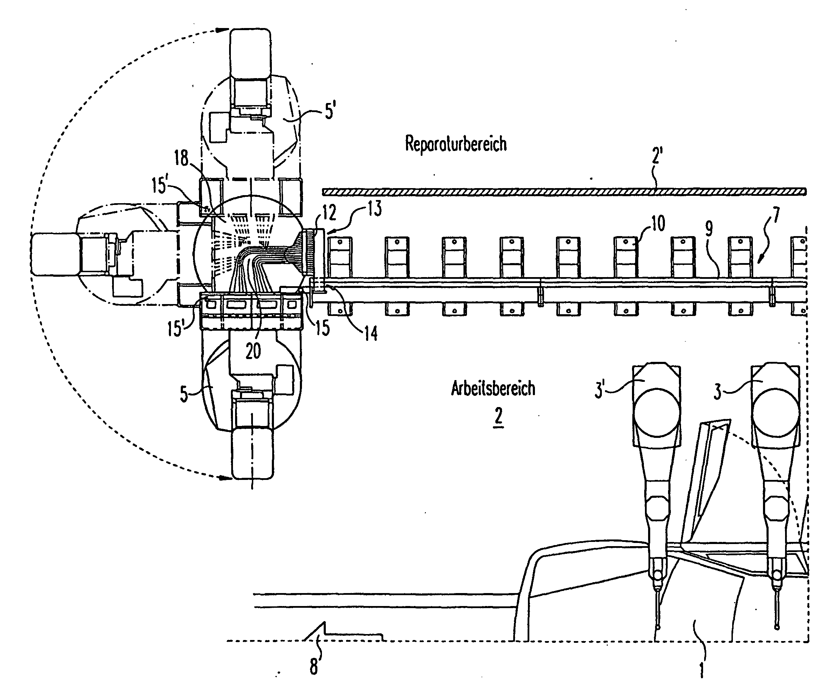

An dem in der Zeichnung schematisch dargestellten bevorzugten Beispiel einer mit Robotern arbeitenden Beschichtungsanlage für Kraftfahrzeuge wird die Erfindung näher erläutert.

In der Zeichnung ist ein Teil einer Kraftfahrzeugkarosse 1 erkennbar, die in einem Arbeitsbereich 2 üblicherweise innerhalb einer Kabine, deren Wand 2' erkennbar ist, von zwei Robotern 3, 3' beschichtet wird, z.B. mit Lack oder Abdichtmaterial. Die Karosse kann hierbei von einem Förderer (nicht dargestellt) durch die Kabine gefördert werden, und auch die Roboter 3, 3' können während der Bearbeitung verfahrbar gelagert sein.

Währenddessen soll eine bei 5 erkennbare dritte Bearbeitungsmaschine, beispielsweise ebenfalls ein Roboter, in einer außerhalb des Arbeitsbereiches 2 befindlichen Wartungsposition 5' zugänglich sein. Die Maschine 5 hat eine (nicht dargestellte) Transporteinrichtung, mit der sie während des normalen Bearbeitungsbetriebes an einer üblicherweise als "Mitfahrachse" bezeichneten ortsfesten Führungskonstruktion 7 längs der Förderlinie 8 der Karosse 1 bewegt wird. Die Führungskonstruktion 7 besteht im wesentlichen aus einer Führungsschiene 9 auf einer Anzahl von Tragfüßen 10.

Die Farb- und sonstigen Versorgungsleitungen 12 der Bearbeitungsmaschine 5 sind an einer nicht dargestellten Stelle der Kabine in den Arbeitsbereich 2 hineingeführt und befinden sich während des normalen Betriebes mit ihrer als Kabelschleppeinrichtung dienenden Halterung 13 auf einem separaten Schlitten 14, der im normalen Betrieb an die Transporteinrichtung des Roboters gekoppelt ist. Gemäß der hier beschriebenen Bearbeitungsanlage ist zwischen der Halterung 13 und der Bearbeitungsmaschine 5 eine lösbare Kopplungskonstruktion 15 vorgesehen, die im normalen Betrieb die Maschine 5 fest mit dem Schlitten 14 verbindet.

Bei dem dargestellten Beispiel ist an dem in der Zeichnung linken Ende der Führungskonstruktion 7 ein um mindestens 180° (zweckmäßig um 360°) drehbarer Ständer 18 angeordnet, auf dem mitdrehbar eine an die Schiene 9 der Führungskonstruktion 8 anschließbare Führungsschiene (nicht dargestellt) angeordnet ist, auf die die Bearbeitungsmaschine mit ihrer Transporteinrichtung geschoben wird, wenn sie gewartet werden soll. Die Drehebene liegt demgemäß parallel zu der Längsrichtung der Führungskonstruktion 7. Vor, beim oder nach dem Aufschieben der Bearbeitungsmaschine auf den drehbaren Ständer 18 wird die Kopplungskonstruktion 15 zwischen der Bearbeitungsmaschine und der Halterung 13 der Versorgungsleitungen 12 gelöst, z.B. selbsttätig oder von Hand.

Nach dem Aufschieben der Bearbeitungsmaschine 5 auf den Ständer 18 befindet sie sich zunächst in der in der Zeichnung (bei 5) unteren Position. Nach dem Abkoppeln der Halterung 13, die auf der ortsfesten Führungskonstruktion 7 verbleibt, kann die Bearbeitungsmaschine dann von dem Ständer 18 um 180° in die Wartungsposition 5' gedreht werden, in der sie sich außerhalb des unzugänglichen Arbeitsbereiches 2 befindet, wie durch die gestrichelte Bogenlinie verdeutlicht ist. Der Ständer 18 kann zu diesem Zweck mit einer geeigneten automatisch steuerbaren Antriebseinrichtung versehen oder von Hand drehbar sein. Der zu der Maschine 5 gehörende Teil der Kupplung, die z.B. einen herausnehmbar in eine Öffnung der Halterung 12 eingreifenden Bolzen o. dgl. enthalten kann, wird beim Drehen der Maschine 5 mitgeschwenkt, wie bei 15' angedeutet ist.

Die Versorgungsleitungen 12 verlaufen zwischen ihrer Halteeinrichtung 13 und der Stelle ihres Eintritts in die auf dem Ständer 18 befindliche Bearbeitungsmaschine 5 in einer großen beweglichen Schlaufe 20, die so lang ist, daß sie der Drehbewegung ohne Abtrennung von der Bearbeitungsmaschine folgen kann. Darstellungsgemäß verläuft die Schlaufe 20 wenigstens annähernd über den Mittel- oder Drehpunkt des Ständers 18, wenn die Bearbeitungsmaschine 5 auf diesem angeordnet ist.

Nach Durchführung der Wartungsarbeiten wird die Bearbeitungsmaschine 5 aus der Wartungsposition 5' von dem Ständer 18 in entgegengesetzter Richtung wieder in die in der Zeichnung untere Position zurückgedreht und von dort auf die ortsfeste Führungskonstruktion 7 zurückgeschoben, wobei durch die Kupplungskonstruktion 15 die zuvor gelöste Verbindung zwischen der Transporteinrichtung des Roboters und der Halterung 13 wiederhergestellt wird.

Statt der beschriebenen Anordnung der zu wartenden Maschine auf einem drehbaren Ständer gibt es auch andere Möglichkeiten zum Herausbewegen der Maschine in die Wartungsposition ohne Abtrennung von ihren Versorgungsleitungen. Beispielsweise könnte die Maschine linear verschoben und/oder um eine horizontale Achse geschwenkt werden.

## Patentansprüche

1. Bearbeitungsanlage zur serienweisen Bearbeitung von Werkstücken, die in einem begrenzten, während des Bearbeitungsbetriebes für die Wartung unzugänglichen Arbeitsbereich (2) längs einer Förderlinie (8) an einer oder mehr automatischen Bearbeitungsmaschinen (3, 5) vorbeibewegt werden,
mit einer Führungskonstruktion (7), an der eine Bearbeitungsmaschine (5) innerhalb eines begrenzten Arbeitsbereiches (2) verfahrbar gelagert ist,
und mit einer mit der Bearbeitungsmaschine (5) verbundenen Anordnung von Versorgungsleitungen (12), die von einer während des Bearbeitungsbetriebes mit der Bearbeitungsmaschine gekoppelten Halteeinrichtung (13) längs der Führungskonstruktion (7) mitbewegt werden,
wobei zumindest der für die Bearbeitung wesentliche Teil der Bearbeitungsmaschine (5) zur Durchführung von Wartungs- oder Reparaturarbeiten aus dem begrenzten Arbeitsbereich (2) in eine Wartungsposition (5') herausbewegbar ist,
**dadurch gekennzeichnet, daß** die Halteeinrichtung (13) der Versorgungsleitungen (12) vor, beim oder nach dem Herausbewegen der Arbeitsmaschine (5) aus dem Arbeitsbereich (2) von der Arbeitsmaschine abkoppelbar ist und an der Führungskonstruktion (7) verbleibt,
und daß die Versorgungsleitungen (12) zwischen ihrer Halteeinrichtung (13) und dem wesentlichen Teil der Bearbeitungsmaschine (5) eine bewegliche Schlaufe (20) bilden, deren Länge zur Verbindung der Versorgungsleitungen (12) mit der Bearbeitungsmaschine auch in deren Wartungsposition (5') ausreicht.

2. Bearbeitungsanlage nach Anspruch 1,
**dadurch gekennzeichnet, daß** die Bearbeitungsmaschine (5) auf einen an einem Ende der Führungskonstruktion (7) vorgesehenen, drehbar gelagerten Ständer (18) schiebbar ist, auf dem mitdrehbar eine an die Führungskonstruktion (7) anschließbare Führungsschiene für die Bearbeitungsmaschine (5) angeordnet ist.

3. Bearbeitungsanlage nach Anspruch 2,
**dadurch gekennzeichnet, daß** die Bearbeitungsmaschine (5) auf dem Ständer (18) in ihre Wartungsposition (5') außerhalb des unzugänglichen Arbeitsbereiches (2) gedreht wird.

4. Bearbeitungsanlage nach Anspruch 2 oder 3,
**dadurch gekennzeichnet, daß** die Leitungsschlaufe (20) beim Drehen des Ständers (18) und der auf ihm angeordneten Bearbeitungsmaschine (5) wenigstens annähernd über den Drehpunkt des Ständers (18) verläuft.

## Claims

1. A processing installation for the serial processing of workpieces, which are moved along a conveyor line (8) past one or more automatic processing machines (3, 5) in a restricted working region (2), which is inaccessible for maintenance during processing operation, including a guide construction (7), on which a processing machine (5) is movably mounted within a limited working region (2) and including an arrangement of supply lines (12), which are connected to the processing machine (5) and are moved with it along the guide construction (7) by a mounting device (13) coupled to the processing machine during the processing operation, whereby at least the portion of the processing machine (5) important for the processing is movable out of the limited working region (2) into a maintenance position (5') for performing maintenance or repair work, **characterised in that** the mounting device (13) of the supply lines (12) may be decoupled from the working machine (5) before, during or after moving the working machine (5) out of the working region (2) and remains on the guide construction (7) and that the supply lines (12) constitute a movable loop (20) between their mounting device (13) and the important portion of the processing machine (5), the length of which is also sufficient to connect the supply lines (12) to the processing machine in their maintenance position (5').

2. A processing installation as claimed in Claim 1, **characterised in that** the processing machine (5) is slidable onto a rotatably mounted frame (18), which is provided at one end of the guide construction (7) and arranged on which to rotate with it is a guide track for the processing machine (5) which is connectable to the guide construction (7).

3. A processing installation as claimed in Claim 2, **characterised in that** the processing machine (5) is rotated on the frame (18) into its maintenance position (5') outside the inaccessible working region (2).

4. A processing installation as claimed in Claim 2 or 3, **characterised in that** the loop (20) of lines extends at least approximately over the rotation point of the frame (18) during rotation of the frame (18) and the processing machine (5) arranged on it.

## Revendications

1. Installation de traitement en série de pièces qui passent le long d'une ligne de transport (8) sur une ou plusieurs machines-outils automatisées (3, 5) dans une zone de travail (2) limitée et inaccessible pour l'entretien pendant le traitement,
dotée d'une structure de guidage (7) sur laquelle est disposée de manière déplaçable une machine-outil (5) dans une zone de travail limitée (2),
et d'une configuration de conduites d'alimentation (12) reliées à la machine-outil (5), un dispositif de support (13) couplé à la machine-outil déplaçant ces conduites d'alimentation le long de la structure de guidage (7) pendant le traitement,
dans lequel au moins l'élément de la machine-outil (5) essentiel au traitement peut se déplacer vers l'extérieur de la zone de travail limitée (2) dans une position d'entretien (5') de manière à effectuer les travaux de réparation et d'entretien,
**caractérisée en ce que** le dispositif de support (13) des conduites d'alimentation (12) peut être désaccouplé de la zone de travail (2) par la machine-outil avant, pendant ou après le déplacement de la machine-outil (5) vers l'extérieur et reste sur la structure de guidage (7)
et **en ce que** les conduites d'alimentation (12) forment entre leur dispositif de support (13) et l'élément essentiel de la machine-outil (5) une boucle déplaçable (20) dont la longueur suffit pour raccorder les conduites d'alimentation (12) à la machine-outil, même en position d'entretien (5').

2. Installation de traitement selon la revendication 1,
**caractérisée en ce que** la machine-outil (5) peut être poussée contre un montant (18) rotatif prévu à une extrémité de la structure de guidage (7) sur lequel est disposé un rail de guidage pour la machine-outil (5) pouvant tourner en même temps que le montant et être raccordé à la structure de guidage (7).

3. Installation de traitement selon la revendication 2,
**caractérisée en ce que** la machine-outil (5) peut être tournée sur le montant (18) dans sa position d'entretien (5') en dehors de la zone de travail (2) inaccessible.

4. Installation de traitement selon la revendication 2 ou 3,
**caractérisée en ce que**, lors de la rotation du montant (18) et de la machine-outil (5) disposée sur celui-ci, la boucle de ligne (20) circule au moins approximativement autour du point de rotation du montant (18).
